# EUROPEAN PATENT APPLICATION

(11) **EP 3 845 374 A1**
(43) Date of publication of application: **07.07.2021**
(21) Application number: 21150368.5
(22) Date of filing: 06.01.2021
(51) Int. Cl.: B32B 3/12, B64C 1/06, B64C 1/10, B64C 1/40

(54) **INTERIOR PANEL HAVING MICRO-PERFORATED HOLES FOR AN INTERIOR OF AN AIRCRAFT AND A METHOD FOR MAKING THE SAME**

(30) Priority: 06.01.2020 US 202016734694
(71) Applicant: Gulfstream Aerospace Corporation, Savannah, Georgia 31402 (US)
(72) Inventor: WANG, Tongan, Savannah, Georgia 31402 (US); MAXON, John W., Savannah, Georgia 31402 (US)
(74) Representative: LKGlobal UK Ltd.

(57) **Abstract**

Interior panels for interiors of aircraft, aircraft, and methods from making interior panels for interiors of aircraft are provided. In one example, the interior panel includes a first relatively hard layer having a first surface that is configured to receive noise from the interior and a second surface that is disposed opposite the first surface. The first relatively hard layer has micro-perforated holes that are formed therethrough and that are spaced apart from each other. A second layer is disposed adjacent to the second surface and has a plurality of openings that are in fluid communication with the plurality of micro-perforated holes. A third layer is disposed adjacent to the second layer. The first relatively hard layer, the second layer, and the third layer are cooperatively configured to attenuate the noise.

## Description

### TECHNICAL FIELD

The technical field relates generally to interior panels for an aircraft, and more particularly, relates to interior panels having micro-perforated holes, for example, for noise attenuation for an interior of an aircraft, aircraft including such interior panels, and methods for making such interior panels.

### BACKGROUND

Many aircraft have interiors that include one or more areas such as a cabin area, lavatory area, galley area, and/or the like for passengers and/or other occupants. These interior areas are typically designed with passenger comfort in mind and may include and/or be separated by interior panels that form part of a bulkhead, a decorative trim and/or decorative surface, a furniture item such as a chair, a seat assembly, a desk, a cabinet, and/or a drawer, a storage bin and/or compartment, a countertop, a credenza, and/or the like.

Aircraft interiors in general can be relatively noisy, especially during taxi, take-off, flight, and landing. While on board an aircraft, passengers and/or other occupants may want to sleep, read, or relax without the disruption of relatively loud, extraneous noises around them. Many aircraft include active and/or passive systems for reducing unwanted noise. For example, some aircraft include active noise cancellation devices, such as, for example, microphones, speakers, amplifiers, and/or the like that cooperate to generate out-of-phase signals for canceling, reducing, or otherwise attenuating noise. Independently or in addition to these active noise cancellation devices, some aircraft include passive noise cancellation devices such as, for example, sound absorbing insulation that is disposed in the walls of the fuselage and that is covered by one or more interior panels and/or other hard interior surface(s).

Unfortunately, active noise cancellation devices can be relatively expensive and/or add additional weight to the aircraft. Further, passive noise reduction devices disposed in the walls of the fuselage and covered by interior panels and/or other hard interior surface(s) not only add additional weight to the aircraft but are also relatively ineffective at attenuating noise that is produced within the aircraft interior since such noise is primarily reflected by the hard interior walls back into the interior without interacting with the passive noise reduction device inside the walls. Rather, such passive noise reduction devices are more effective at preventing noise produced outside the aircraft from entering into the aircraft interior.

Accordingly, it is desirable to provide an interior panel for an interior of an aircraft that addresses one or more of the foregoing issues, aircraft including such interior panels, and methods for making such interior panels. Furthermore, other desirable features and characteristics of the various embodiments described herein will become apparent from the subsequent detailed description and the appended claims, taken in conjunction with the accompanying drawings and this background.

### SUMMARY

Various non-limiting embodiments of an interior panel for an interior of an aircraft, an aircraft, and a method for making an interior panel for an interior of an aircraft are provided herein.

In a first non-limiting embodiment, the interior panel includes, but is not limited to, a first relatively hard layer having a first surface that is configured to receive noise from the interior and a second surface that is disposed opposite the first surface. The first relatively hard layer has micro-perforated holes that are formed therethrough and that are spaced apart from each other. The interior panel further includes, but is not limited to, a second layer that is disposed adjacent to the second surface and that has a plurality of openings in fluid communication with the plurality of micro-perforated holes. The interior panel further includes, but is not limited to, a third layer that is disposed adjacent to the second layer. The first relatively hard layer, the second layer, and the third layer are cooperatively configured to attenuate the noise.

In another non-limiting embodiment, the aircraft includes, but is not limited to, an aircraft structure having an interior. The aircraft further includes, but is not limited to, an interior panel that is disposed in the interior. The interior panel includes, but is not limited to, a first relatively hard layer having a first surface that is configured to receive noise from the interior and a second surface that is disposed opposite the first surface. The first relatively hard layer has micro-perforated holes that are formed therethrough and that are spaced apart from each other. The interior panel further includes, but is not limited to, a second layer that is disposed adjacent to the second surface and that has a plurality of openings in fluid communication with the plurality of micro-perforated holes. The interior panel further includes, but is not limited to, a third layer that is disposed adjacent to the second layer. The first relatively hard layer, the second layer, and the third layer are cooperatively configured to attenuate the noise.

In another non-limiting embodiment, the method includes, but is not limited to, obtaining a first relatively hard layer that has a first surface configured to receive noise from the interior and that has a second surface disposed opposite the first surface. The first relatively hard layer has micro-perforated holes that are formed therethrough and that are spaced apart from each other. The method further includes, but is not limited to, obtaining a second layer having a plurality of openings. The method further includes, but is not limited to, disposing the second layer adjacent to the second surface such that the plurality of openings is in fluid communication with the plurality of micro-perforated holes. The method further includes, but is not limited to, obtaining a third layer. The method further includes, but is not limited to, disposing the third layer adjacent to the second layer such that the first relatively hard layer, the second layer, and the third layer are cooperatively configured to attenuate the noise.

### BRIEF DESCRIPTION OF THE DRAWINGS

The various embodiments will hereinafter be described in conjunction with the following drawing figures, wherein like numerals denote like elements, and wherein:
FIG. 1 illustrates a top tear-away view of an aircraft having an aircraft structure that at least partially surrounds an interior in accordance with an exemplary embodiment;
FIG. 2 illustrates a top view of an interior panel having micro-perforated holes in accordance with an exemplary embodiment;
FIG. 3 illustrates a cross-sectional view of the interior panel depicted in FIG. 2 along line 3-3;
FIG. 4 illustrates a top view of a mesh bonding agent for an interior panel in accordance with an exemplary embodiment; and
FIG. 5 illustrates a flow diagram for a method for making an interior panel for an interior of an aircraft in accordance with an exemplary embodiment.

### DETAILED DESCRIPTION

The following Detailed Description is merely exemplary in nature and is not intended to limit the various embodiments or the application and uses thereof. Furthermore, there is no intention to be bound by any theory presented in the preceding background or the following detailed description.

Various embodiments contemplated herein relate to interior panels for interiors of aircraft, aircraft including interior panels, and methods for making interior panels for interiors of aircraft. The exemplary embodiments taught herein provide an aircraft having an aircraft structure. The aircraft structure has an interior with an interior panel disposed therein. The interior panel includes a first relatively hard layer having a first surface that is configured to receive noise from the interior and a second surface that is disposed opposite the first surface. The first relatively hard layer has micro-perforated holes that are formed therethrough and that are spaced apart from each other. A second layer is disposed adjacent to the second surface and has a plurality of openings in fluid communication with the plurality of micro-perforated holes. A third layer is disposed adjacent to the second layer. In an exemplary embodiment, the third layer is a continuous, nonporous-solid layer. The first relatively hard layer, the second layer, and the third layer cooperate to attenuate the noise, for example, to reduce undesirable noise in the interior of the aircraft.

Without being limited by theory, in an exemplary embodiment, it is believed that noise is transmitted by wavelike movement of air molecules and that by permitting the oscillation of these air molecules in the micro-perforated holes of the first relatively hard layer, the noise is at least partially converted into thermal energy (e.g., heat), thereby attenuating the noise. Further and without being limited by theory, in an exemplary embodiment, it is believed that the remaining portion(s) of noise that passes through the micro-perforated holes travels through the openings of the second layer to the third layer where the noise is reflected, traveling back again through the openings of the second layer to the first relatively hard layer for further attenuation of the noise in the micro-perforated holes.

In an exemplary embodiment, advantageously by attenuating the noise, which for example is generated within the aircraft interior, with the interior panel, the noise is efficiently and effectively attenuated proximate to its source without additional weight and/or expense often associated with using conventional active and/or passive systems for reducing unwanted noise.

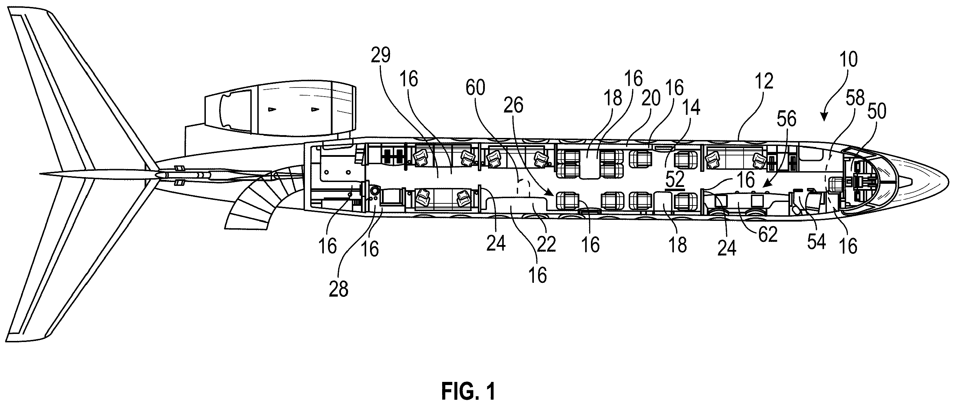

FIG. 1 illustrates a top tear-away view of an aircraft 10 including an aircraft structure 12 having an interior 14 in accordance with an exemplary embodiment. As illustrated, the aircraft structure 12 forms a fuselage that at least partially surrounds the interior 14. The interior 14 includes various areas for the aircraft occupants including, for example, a cockpit area 50, a cabin area 52, a lavatory area 54, and a galley area 56.

In an exemplary embodiment, the various areas 50, 52, 54, and 56 of the interior 14 of the aircraft 10 are designed with occupant comfort in mind and include and/or are separated by one or more interior panels 16. The various interior panel(s) 16 may form part of a bulkhead 24, a decorative trim and/or decorative surface, a furniture item, and/or at least a portion of any article of the aircraft 10 having a relatively hard outer layer or surface. In the illustrated example, one of more of the interior panels 16, independently, form at least a portion of a table 18, a wall 20, a credenza 22, the bulkhead 24, a chair 26, a countertop 28, a flooring 29, a ceiling (indicted by dashed line 58), a drawer (indicated by dashed line 60), a cabinet 62, and/or the like.

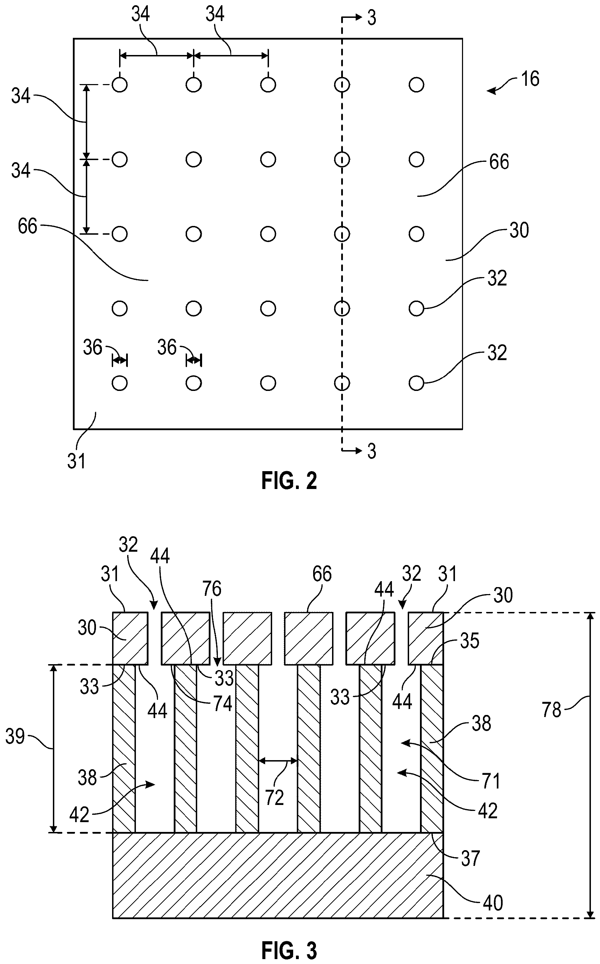

FIG. 2 illustrates a top view of the interior panel 16 as discussed above in accordance with an exemplary embodiment. FIG. 3 illustrates a cross-sectional view of the interior panel depicted in FIG. 2 along line 3-3. The interior panel 16 includes a relatively hard layer 30 (e.g., outer or first layer), an intermediate layer 38 (e.g., interposing or second layer), and a solid layer 40 (e.g., backing or third layer). The relatively hard layer 30 extends from an outer surface 31 to a second surface 33 that is disposed opposite the outer surface 31 and includes a plurality of micro-perforated holes 32 formed therethrough. The outer surface 31 is exposed, directly, indirectly, or selectively, to the interior 14 of the aircraft 10 to receive noise from the interior 14.

As illustrated, the relatively hard layer 30 has a continuous solid portion 66 disposed about the spaced apart microperforated holes 32. As used herein, the phrase "continuous solid portion 66 of the relatively hard layer 30" refers to the portion(s) of the relatively hard layer 30 that is free of any micro-perforated holes 32. This means, for example, that the continuous solid portion 66 includes the portion(s) of the relatively hard layer 30 that surrounds the micro-perforated holes 32 but does not include the micro-perforated holes 32 themselves.

In an exemplary embodiment, the continuous solid portion 66 of the relatively hard layer 30 is relatively hard. As used herein, the phrase "relatively hard" means a layer, material, or surface having a hardness that is measurable on a Shore D hardness scale and/or on a hardness scale that measures hardness values that are greater than Shore D hardness values. In an exemplary embodiment, the continuous solid portion 66 of the relatively hard layer 30 has a Shore D hardness of from about 10 to about 100. In an exemplary embodiment, the continuous solid portion 66 of the relatively hard layer 30 has a density of from about 51b/ft3 to about 200lb/ft3. The relatively hard layer 30 is or otherwise formed of, for example, wood, a composite material (e.g., fiber reinforced plastic or polymeric material or the like), veneer, a relatively hard plastic, a finished or decorated relatively hard material, and/or the like.

As indicated above, the micro-perforated holes 32 formed through the relatively hard layer 30 are spaced apart from each other. In an exemplary embodiment, the micro-perforated holes 32 are spaced apart (indicated by double-headed arrows 34) substantially equidistant from each other. As used herein, the phrase "spaced apart substantially equidistant from each other" refers to elements that have equal or nearly equal spacing distance between each other within standard manufacturing or production tolerances such as within or having a variability of +/- 10%, such as +/- 5%, for example +/- 3%, from the mean spacing distance. Alternatively, the microperforated holes 32 may be spaced apart from each other at non-equidistant distances. For example, a portion(s) of the microperforated holes 32 may be spaced relatively closely to each other while another portion(s) of the microperforated holes 32 may be spaced further apart from each other to form a pattern or logo in the outer surface 31. In an exemplary embodiment, the micro-perforated holes 32 are spaced apart from each other (e.g., adjacent microperforated holes 32) a distance of less than 0.5 inches such as, for example, a distance of from about 0.05 to about 0.49 inches.

In an exemplary embodiment, the micro-perforated holes 32 have substantially equal diameters 36 (indicated by double-headed arrows 36). As used herein, the phrase "substantially equal diameters" refers to elements that have "equal or nearly equal diameters or dimensions (e.g., if not circular)" within standard manufacturing or production tolerances such as within or having a variability of +/- 10%, such as +/- 5%, for example +/- 3%, from the mean diameter or dimension. Alternatively, the microperforated holes 32 may have different diameters from each other. In an exemplary embodiment, the micro-perforated holes 32 each have a diameter of less than 0.05 inches such as, for example, a diameter of from about 0.0003 inches to about 0.049 inches.

The intermediate layer 38 is disposed adjacent to the relatively hard layer 30. In an exemplary embodiment, the intermediate layer 38 is disposed adjacent to the second surface 33 of the relatively hard layer 30. The intermediate layer 38 has a plurality of openings 42 in fluid communication with the plurality of micro-perforated holes 32. Although the interior panel 16 is illustrated as having corresponding micro-perforated holes 32 in fluid communication with corresponding openings 42, various embodiments of the interior panel 16 may include more than one opening 42 in fluid communication with an individual micro-perforated hole 32, or alternatively, more than one micro-perforated hole 32 in fluid communication with an individual opening 42.

The intermediate layer 38 extends from a first or top surface 35 to a second or bottom surface 37. In an exemplary embodiment, the openings 42 extend from the top surface 35 to or otherwise towards the bottom surface 37. In an exemplary embodiment, the intermediate layer 38 is or includes a honeycomb structure 71 in which each of the openings 42 in the honeycomb structure 71 have a diameter or maximum cross-sectional dimension (indicated by double-headed arrow 72) of from about 0.125 to about 1.5 inches. In an exemplary embodiment, the honeycomb structure 71 is formed of a structural material such as a metal material, e.g., metal honeycomb structure, a composite material such as a Nomex® honeycomb product, or the like. In an exemplary embodiment, the intermediate layer 38 has a thickness (indicated by double-headed arrow 39) of more than 0.125 inches such as, for example, a thickness of from about 0.126 inches to about 1.5 inches.

The solid layer 40 is disposed adjacent to the intermediate layer 38 opposite the relatively hard layer 30. In an exemplary embodiment, the solid layer 40 is a nonporous solid structural material, such as a fiber reinforced composite material, a metal material, or the like, and is effective at reflecting or substantially reflecting noise. In an exemplary embodiment, the interior panel 16 has a total thickness (indicated by double headed arrow 78) of from about 0.1 to about 3 inches, such as from about 0.25 to about 1.0 inches.

The relatively hard layer 30, the intermediate layer 38, and the solid layer 40 cooperate to attenuate noise. Without being bound by theory and as discussed above, in an exemplary embodiment, it is believed that noise is transmitted by wavelike movement of air molecules and that by permitting the oscillation of these air molecules in the micro-perforated holes 32, noise that travels into and/or through the micro-perforated holes 32 is at least partially converted into thermal energy, thereby attenuating the noise. Further and without being limited by theory, in an exemplary embodiment, it is believed that a remaining portion of the noise that passes through the micro-perforated holes 32 travels through the openings 42 of the intermediate layer 38 to the hard layer 40 where the noise is reflected, traveling back again through the openings 42 of the intermediate layer 38 to the relatively hard layer 30 for further attenuation of the noise in the micro-perforated holes 32.

In an exemplary embodiment, the relatively hard layer 30 is hidden from the interior 14. A table covered underside surface, a credenza covered underside surface, a ceiling covered upper surface facing opposite the interior 14, a flooring covered bottom surface, a counter covered underside surface, and/or the like are examples where the relatively hard layer 30 is hidden from the interior 14. In an exemplary embodiment, arranging the the relatively hard layer 30 such that it is hidden from the interior 14 helps to attenuate the noise in the interior 14 by positioning the micro-perforated holes 32 to readily receive the noise from the interior 14 while not impacting the aesthetics of conventional solid surface finishing.

Referring to FIGS. 3-4, in an exemplary embodiment, the interior panel 16 further includes a mesh bonding agent 44. The mesh bonding agent 44 secures or otherwise affixes the relatively hard layer 30 to the intermediate layer 38. As illustrated, the mesh bonding agent 44 is disposed between the second surface 33 of the relatively hard layer 30 and the top surface 35 of the intermediate layer 38. In an exemplary embodiment, the mesh bonding agent 44 has a mesh-like structure formed of reinforcing fibers 75 that are coated or otherwise impregnated with an adhesive, e.g., an epoxy adhesive, a polyurethane adhesive, an acrylic adhesive, or the like, that cures or otherwise bonds the relatively hard layer 30 and the intermediate layer 38 together. In an exemplary embodiment, the mesh-like structure of the mesh bonding agent 44 allows unobstructed fluid communication between the micro-perforated holes 32 and the openings 42. For example, the mesh bonding agent 44 has an interlaced bonding structure/mesh bonding network that includes holes 76 that are substantially aligned with the micro-perforated holes 32 and the openings 42 to permit fluid communication between the micro-perforated holes 32 and the openings 42. As such, noise that travels through the micro-perforated holes 32 can advance through the holes 76 past the mesh bonding agent 44 into the openings 42 towards the solid layer 40 and vice versa as discussed above.

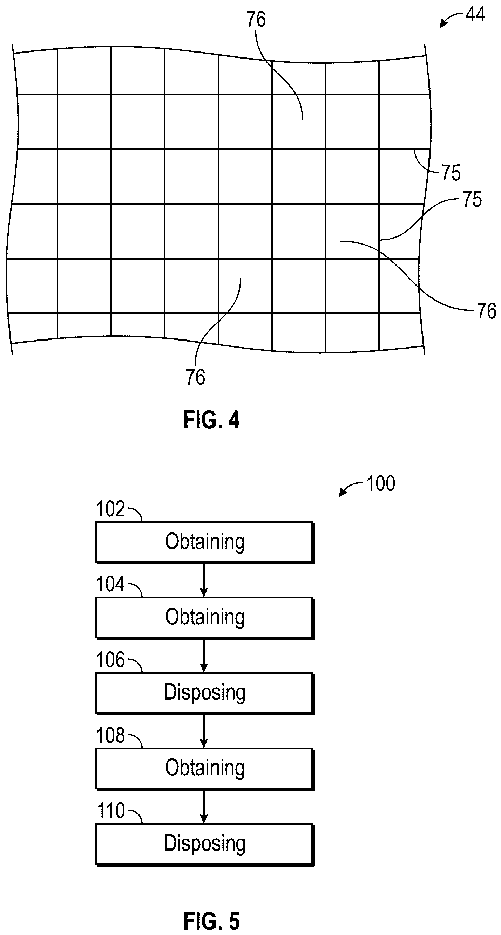

Referring to FIG. 5, a method 100 for making an interior panel for an interior of an aircraft in accordance with an exemplary embodiment is provided. The method 100 includes obtaining (STEP 102) a first relatively hard layer that has a first surface configured to receive noise from the interior and that has a second surface disposed opposite the first surface. For example, the first relatively hard layer may be obtained by forming the first relatively hard layer, procuring the first relatively hard layer, and/or locating the first relatively hard layer. The first relatively hard layer has micro-perforated holes that are formed therethrough and that are spaced apart from each other.

A second layer having a plurality of openings is obtained (STEP 104). For example, the second layer may be obtained by forming the second layer, procuring the second layer, and/or locating the second layer. The second layer is disposed (STEP 106) adjacent to the second surface such that the plurality of openings is in fluid communication with the plurality of micro-perforated holes.

A third layer is obtained (STEP 108). For example, the third layer may be obtained by forming the third layer, procuring the third layer, and/or locating the third layer. The third layer is disposed (STEP 110) adjacent to the second layer such that the first relatively hard layer, the second layer, and the third layer are cooperatively configured to attenuate the noise.

While at least one exemplary embodiment has been presented in the foregoing detailed description of the disclosure, it should be appreciated that a vast number of variations exist. It should also be appreciated that the exemplary embodiment or exemplary embodiments are only examples, and are not intended to limit the scope, applicability, or configuration of the disclosure in any way. Rather, the foregoing detailed description will provide those skilled in the art with a convenient road map for implementing an exemplary embodiment of the disclosure. It being understood that various changes may be made in the function and arrangement of elements described in an exemplary embodiment without departing from the scope of the disclosure as set forth in the appended claims.

The present disclosure may be further described by the following Aspects.
**Aspect 1.** An interior panel for an interior of an aircraft, the interior panel comprising:
   a first relatively hard layer having a first surface that is configured to receive noise from the interior and a second surface that is disposed opposite the first surface, wherein the first relatively hard layer has micro-perforated holes that are formed therethrough and that are spaced apart from each other;
   a second layer that is disposed adjacent to the second surface and that has a plurality of openings in fluid communication with the plurality of micro-perforated holes; and
   a third layer that is disposed adjacent to the second layer, wherein the first relatively hard layer, the second layer, and the third layer are cooperatively configured to attenuate the noise.
**Aspect 2.** The interior panel of Aspect 1, wherein the first relatively hard layer has a continuous solid portion that surrounds the micro-perforated holes, and wherein the continuous solid portion has a Shore D hardness of from about 10 to about 100.
**Aspect 3.** The interior panel of Aspect 2, wherein the continuous solid portion has a density of from about 5lb/ft³ to about 2001b/ft3.
**Aspect 4.** The interior panel of any one of Aspects 1-3, wherein the interior panel further comprises a mesh bonding agent that is disposed between the first relatively hard layer and the second layer.
**Aspect 5.** The interior panel of any one of Aspects 1-4, wherein the second layer has a depth of greater than 0.125inches.
**Aspect 6.** The interior panel of any one of Aspects 1-5, wherein the micro-perforated holes each have a diameter of less than 0.05inches.
**Aspect 7.** The interior panel of any one of Aspects 1-6, wherein the third layer is a continuous solid layer.
**Aspect 8.** The interior panel of any one of Aspects 1-7, wherein the first relatively hard layer is configured to be hidden from the interior.
**Aspect 9.** The interior panel of any one of Aspects 1-8, wherein the micro-perforated holes are spaced substantially equidistantly apart from each other.
**Aspect 10.** The interior panel of any one of Aspects 1-9, wherein the micro-perforated holes are spaced apart from each other a distance of less than 0.5inches.
**Aspect 11.** The interior panel of any one of Aspects 1-10, wherein the second layer includes a honeycomb structure.
**Aspect 12.** An aircraft, comprising:
   an aircraft structure having an interior; and
   an interior panel that is disposed in the interior, wherein the interior panel comprises:
      a first relatively hard layer having a first surface that is configured to receive noise from the interior and a second surface that is disposed opposite the first surface, wherein the first relatively hard layer has micro-perforated holes that are formed therethrough and that are spaced apart from each other;
      a second layer that is disposed adjacent to the second surface and that has a plurality of openings in fluid communication with the plurality of micro-perforated holes; and
      a third layer that is disposed adjacent to the second layer, wherein the first relatively hard layer, the second layer, and the third layer are cooperatively configured to attenuate the noise.
**Aspect 13.** The aircraft of Aspect 12, wherein the first relatively hard layer has a continuous solid portion that surrounds the micro-perforated holes, and wherein the continuous solid portion has a shore D hardness of from about 10 to about 100.
**Aspect 14.** The aircraft of Aspects 12 or 13, wherein the first relatively hard layer has a density of from about 5lb/ft³ to about 200lb/ft³.
**Aspect 15.** The aircraft of any one of Aspects 12-14, wherein the interior panel further comprises a mesh bonding agent that is disposed between the first relatively hard layer and the second layer.
**Aspect 16.** The aircraft of any one of Aspects 12-15, wherein the second layer has a depth of greater than 0.125inches.
**Aspect 17.** The aircraft of any one of Aspects 12-16, wherein the plurality of micro-perforated holes have a diameter of less than 0.05inches.
**Aspect 18.** The aircraft of any one of Aspects 12-17, wherein the third layer is a continuous solid layer.
**Aspect 19.** The aircraft of any one of Aspects 12-18, wherein the first relatively hard layer is configured to be hidden from the interior.
**Aspect 20.** A method for making an interior panel for an interior of an aircraft, the method comprising the steps of:
   obtaining a first relatively hard layer that has a first surface configured to receive noise from the interior and that has a second surface disposed opposite the first surface, wherein the first relatively hard layer has micro-perforated holes that are formed therethrough and that are spaced apart from each other;
   obtaining a second layer having a plurality of openings;
   disposing the second layer adjacent to the second surface such that the plurality of openings is in fluid communication with the plurality of micro-perforated holes;
   obtaining a third layer; and
   disposing the third layer adjacent to the second layer such that the first relatively hard layer, the second layer, and the third layer are cooperatively configured to attenuate the noise.

## Claims

1. An interior panel for an interior of an aircraft, the interior panel comprising:
a first relatively hard layer having a first surface that is configured to receive noise from the interior and a second surface that is disposed opposite the first surface, wherein the first relatively hard layer has micro-perforated holes that are formed therethrough and that are spaced apart from each other;
a second layer that is disposed adjacent to the second surface and that has a plurality of openings in fluid communication with the plurality of micro-perforated holes; and
a third layer that is disposed adjacent to the second layer, wherein the first relatively hard layer, the second layer, and the third layer are cooperatively configured to attenuate the noise.

2. The interior panel of claim 1, wherein the first relatively hard layer has a continuous solid portion that surrounds the micro-perforated holes, and wherein the continuous solid portion has a Shore D hardness of from about 10 to about 100.

3. The interior panel of claim 2, wherein the continuous solid portion has a density of from about 5lb/ft³ to about 200lb/ft³.

4. The interior panel of claims 1 or 2, wherein the interior panel further comprises a mesh bonding agent that is disposed between the first relatively hard layer and the second layer.

5. The interior panel of any one of claims 1-4, wherein the second layer has a depth of greater than 0.125inches.

6. The interior panel of any one of claims 1-5, wherein the micro-perforated holes each have a diameter of less than 0.05inches.

7. The interior panel of any one of claims 1-6, wherein the third layer is a continuous solid layer.

8. The interior panel of any one of claims 1-7, wherein the first relatively hard layer is configured to be hidden from the interior.

9. The interior panel of any one of claims 1-8, wherein the micro-perforated holes are spaced substantially equidistantly apart from each other.

10. The interior panel of any one of claims 1-9, wherein the micro-perforated holes are spaced apart from each other a distance of less than 0.5inches.

11. The interior panel of any one of claims 1-10, wherein the second layer includes a honeycomb structure.

12. An aircraft, comprising:
an aircraft structure having an interior; and
an interior panel according to any one of claims 1 to 11.

13. A method for making an interior panel for an interior of an aircraft, the method comprising the steps of:
obtaining a first relatively hard layer that has a first surface configured to receive noise from the interior and that has a second surface disposed opposite the first surface, wherein the first relatively hard layer has micro-perforated holes that are formed therethrough and that are spaced apart from each other;
obtaining a second layer having a plurality of openings;
disposing the second layer adjacent to the second surface such that the plurality of openings is in fluid communication with the plurality of micro-perforated holes;
obtaining a third layer; and
disposing the third layer adjacent to the second layer such that the first relatively hard layer, the second layer, and the third layer are cooperatively configured to attenuate the noise.
